# EUROPEAN PATENT SPECIFICATION

(11) **EP 3 041 194 B1**
(45) Date of publication and mention of the grant of the patent: **08.04.2020**
(21) Application number: 16153931.7
(22) Date of filing: 21.10.2003
(51) Int. Cl.: H04L 29/06, H04L 29/08, G05B 15/02

(54) **SYSTEM AND METHODOLOGY PROVIDING AUTOMATION SECURITY PROTOCOLS AND INTRUSION DETECTION IN AN INDUSTRIAL CONTROLLER ENVIRONMENT**
SYSTEM UND VERFAHREN ZUR BEREITSTELLUNG VON AUTOMATISIERUNGSSICHERHEITSPROTOKOLLEN UND EINDRINGUNGSDETEKTION IN EINE INDUSTRIELLE STEUERUNGSUMGEBUNG
SYSTÈME ET MÉTHODOLOGIE ASSURANT DES PROTOCOLES DE SÉCURITÉ D'AUTOMATISATION ET DE DÉTECTION D'INTRUSION DANS UN ENVIRONNEMENT DE CONTRÔLE INDUSTRIEL

(30) Priority: 21.10.2002 US 420006 P; 12.09.2003 US 661690 P
(43) Date of publication of application: 06.07.2016
(62) Divisional of application: 03023911.5
(73) Proprietor: Rockwell Automation Technologies, Inc., Milwaukee, Wisconsin 53204 (US)
(72) Inventor: Brandt, David D., Milwaukee, WI Wisconsin 53219 (US); Hall, Kenwood, Hudson, OH Ohio 44236 (US); Carnahan, Danny L., Hudson, OH Ohio 44236 (US); Chand, Sujeet, Brookfield, WI Wisconsin 53045 (US)
(74) Representative: Grünecker Patent- und Rechtsanwälte PartG mbB

(56) References cited:
- Paul Oman ET AL: "Safeguarding IEDs, Substations, and SCADA Systems Against Electronic Intrusions", , 27 March 2002 (2002-03-27), XP055285491, Retrieved from the Internet: URL:https://cdn.selinc.com//assets/Literat ure/Publications/Technical Papers/6118_SafeguardingIEDs_Web.pdf?v=201 51130-151030 [retrieved on 2016-07-04]
- OMAN P ET AL: "Concerns About Intrusions Into Remotely Accessible Substation Controllers And Scada Systems", INTERNET CITATION, 26 October 2000 (2000-10-26), XP002351759, Retrieved from the Internet: URL:http://www.csds.uidaho.edu/deb/SCADA.p df [retrieved on 2005-10-28]
- BYRES E J: "Designing secure networks for process control", PULP AND PAPER, 1999. INDUSTRY TECHNICAL CONFERENCE RECORD OF 1999 ANN UAL SEATTLE, WA, USA 21-25 JUNE 1999, PISCATAWAY, NJ, USA,IEEE, US, 21 June 1999 (1999-06-21), pages 63-67, XP032138791, DOI: 10.1109/PAPCON.1999.779346 ISBN: 978-0-7803-5526-2

## Description

### TECHNICAL FIELD

The present invention relates generally to industrial control systems, and more particularly to a system and methodology to facilitate electronic and network security in an industrial automation system.

### BACKGROUND OF THE INVENTION

Industrial controllers are special-purpose computers utilized for controlling industrial processes, manufacturing equipment, and other factory automation, such as data collection or networked systems. In accordance with a control program, the industrial controller, having an associated processor (or processors), measures one or more process variables or inputs reflecting the status of a controlled system, and changes outputs effecting control of such system. The inputs and outputs may be binary, (e.g., on or off), as well as analog inputs and outputs assuming a continuous range of values.

Measured inputs received from such systems and the outputs transmitted by the systems generally pass through one or more input/output (I/O) modules. These I/O modules serve as an electrical interface to the controller and may be located proximate or remote from the controller including remote network interfaces to associated systems. Inputs and outputs may be recorded in an I/O table in processor memory, wherein input values may be asynchronously read from one or more input modules and output values written to the I/O table for subsequent communication to the control system by specialized communications circuitry (*e.g.,* back plane interface, communications module). Output modules may interface directly with one or more control elements, by receiving an output from the I/O table to control a device such as a motor, valve, solenoid, amplifier, and the like.

At the core of the industrial control system, is a logic processor such as a Programmable Logic Controller (PLC) or PC-based controller. Programmable Logic Controllers for instance, are programmed by systems designers to operate manufacturing processes *via* user-designed logic programs or user programs. The user programs are stored in memory and generally executed by the PLC in a sequential manner although instruction jumping, looping and interrupt routines, for example, are also common. Associated with the user program are a plurality of memory elements or variables that provide dynamics to PLC operations and programs. These variables can be user-defined and can be defined as bits, bytes, words, integers, floating point numbers, timers, counters and/or other data types to name but a few examples.

Various remote applications or systems often attempt to update and/or acquire PLC information or related device information *via* a plurality of different, competing and often incompatible or insecure network technologies. A major concern with this type of access to PLC's and control systems in general, relates to the amount of security that is provided when sending or receiving data to and from the PLC and/or associated equipment. In most factories or industrial environments, complex and sometimes dangerous operations are performed in a given manufacturing setting. Thus, if a network-connected controller were inadvertently accessed, or even worse, intentional sabotage were to occur by a rogue machine or individual, potentially harmful results can occur.

One attempt at providing security in industrial control systems relates to simple password protection to limit access to the systems. This can take the form of a plant or controls Engineer or Administrator entering an alpha-numeric string that is typed by an operator each time access is attempted, wherein the controller grants access based on a successful typing of the password. These type passwords are highly prone to attack or discovery, however. Often times, users employ passwords that are relatively easy to determine (*e.g.,* person's name or birthday). Sometimes, users exchange passwords with other users, whereby the password is overheard or simply, a user with improper authorization comes in contact with the password. Even if a somewhat higher level of security is provided, parties employing sophisticated hacking techniques can often penetrate sensitive control systems, whereby access should be limited to authorized users and/or systems in order to mitigate potentially harmful consequences.

Paul Oman et al., "Safeguarding IEDs, Substations, and SCADA Systems Against Electronic Intrusions" discloses technologies and procedures for safeguarding IEDs, PLCs, substation controllers, and networked SCADA systems against electronic intrusions. Technologies for access restrictions, audit logs, authentication, encryption, nonrepudiation, modem and network security, and network topologies are shown to reduce vulnerability and increase survivability of integrated solutions for protection, metering, and SCADA.

Paul Oman et al., "Concerns about Intrusions and Remotely Accessible Substation Controllers and SCADA Systems" discloses identifying threats to power substation controllers and SCADA systems, and discusses mitigating mechanisms to reduce vulnerability to malicious electronic intrusions.

E. J. Byres, P. Eng, "Designing Secure Networks for Process Control" relates to wiring each group of 'matched' devices on their own private network, and connect all the groups through routers or routing-switches. A Virtual Local Area Network (VLAN) is proposed.

It is the object of the present invention to provide improved intrusion detection for industrial control systems.

This object is solved by the subject-matter of the independent claims.

Embodiments are defined by the dependent claims.

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention relates to a system and methodology to facilitate network and/or automation device security in an industrial automation environment. Various systems and methodologies are provided to promote security across and/or within networks and in accordance with different device capabilities. In one aspect of the present invention, one or more automation security protocols are provided that facilitate secure operations and communications within a control or factory environment. The security protocols include a set of scalable, real-time, lightweight, distributed security protocols, that can be deployed, operated, and/or maintained in accordance with a factory setting in a reliable and unobtrusive manner.

In one aspect, a set of lightweight integrity mechanisms can be provided to facilitate that correct data arrives at desired end points of communications. Such mechanisms include time components, message digests, digital signatures, and sequence numbers, for example. Time-based components can be encoded within the security protocols that include security time-outs after a predetermined amount of time has passed and thus, can cause a subsequent determination or security negotiation before further data transactions can be achieved. Other aspects include validating sources, checking whether message digests have been altered, and refreshing security protocols and components periodically to mitigate intrusion or attack from unauthorized network devices.

Another protocol aspect includes providing lightweight privacy or encryption mechanisms during higher performance data transfers and utilizing more elaborate mechanisms for non-real time events. For example, real-time data delivery is typically not required for session establishment protocols (wherein identification information is carried) and device configuration (such as downloading a recipe). Thus, for non-real time interactions, a set of protocols for session management can be provided that may include mutual authentication, ciphersuite negotiation, and/or other security actions with authentication and authorization services, for example. A set of lightweight host and network intrusion detection methods/components can also be provided for host network devices and associated network applications (*e.g.,* Host Intrusion Detection (HIDS) for device and/or Network Intrusion Detection (NIDS) to monitor control networks). This can include such aspects as installing embedded components on low-end devices designed to monitor various network protocols for potential attacks or unwanted access and/or include network devices designed to monitor a plurality of network devices or general network traffic for such attacks and unwanted access.

Protocol extensions can also be adapted to low-end factory networks. The extensions can also accommodate higher performance or public network protocols, wherein factory and non-factory applications can be attacked, and tunneling attacks are possible. In another aspect, security packets can be adapted or provided in factory networks. For example, factory device functionality can be described in terms of an object model. Basic functionality (such as identification and revision level) applies to many devices. Other functionality applies to specific device types (such as start, stop, forward/reverse in a motor drive). Optional protocol extensions facilitate enhancements such as security extensions, while still maintaining backward compatibility.

Another aspect of factory protocols is the definition of control-specific transport mechanisms for data exchange between devices. The protocol supports a number of transport methods including producer/consumer, client/server and broadcast modes. These transport mechanisms are based on the concept of a connection. Before information is exchanged, a connection can be negotiated between an originator and a target of communications between end points. The connection is typically defined by many elements such as a path, object, packet size, transfer rate and so forth. The path typically contains multiple segments that establish where, what and how information is to be transferred. Additional segments are employed to control scheduling of data transfers over some of the link layers.

Protocol or packet extensions can be provided in association with factory protocols such as extending the path information to include a *who* segment to identify/authenticate a requester/supplier of the connection, wherein authentication includes mutual authentication to mitigate network "spoofing" by entities who may misrepresent who they are. This may take the form of an encrypted identification, certificate, public key and/or other process to identify the requester of the connection. Control devices can be adapted to verify the identity in the *who* segment in conjunction with centralized support. Similar low-end security can be addressed in wireless communications. Thus, one or more wireless protocols can similarly be provided as a security protocol. Also, other aspects can include limiting access to devices based upon such factors as line of site parameters.

In view of the above, the present invention includes real time security aspects relating to industrial control that includes integrity, confidentiality, and availability aspects. These aspects include real-time control of factory protocols based on integrity (*e.g.,* making sure a device or component reflects a commanded state), and availability (*e.g.,* can control system execute commands when requested). These aspects often include security areas that are different from non-control environment IT security concerns. Combining integrity and availability also provides the additional factory need for safety that is facilitated by the security components and protocols provided by the present invention. Confidentiality is another aspect that is becoming more important with regard to recipes, and specialized control programs (*e.g.,* protection of a special algorithm that shouldn't be disclosed to anyone (or subset of users) who has a programming device). Thus, the security mechanisms employed for lower factory protocol layers can also be applied at the "software component" level. Moreover, various security components and/or functionality can be deployed across devices and/or components that can also include nesting of security at the component level (*e.g.,* one or more security levels at device, one or more security levels at software interfacing to device, one or more security levels applied to device firmware and communications protocols).

The following description and the annexed drawings set forth in detail certain illustrative aspects of the invention. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

### BRIEF DESCRIPTION OF THE DRAWINGS

Fig. 1 is a schematic block diagram illustrating an automation security system in accordance with an aspect of the present invention.
Fig. 2 is a diagram illustrating security protocols in accordance with an aspect of the present invention.
Fig. 3 is a diagram illustrating an example security protocol in accordance with an aspect of the present invention.
Fig. 4 is a diagram illustrating an example security protocol extension in accordance with an aspect of the present invention.
Fig. 5 is a diagram illustrating dynamic protocol operations in accordance with an aspect of the present invention.
Fig. 6 is a schematic block diagram illustrating security communications in accordance with an aspect of the present invention.
Fig. 7 is a schematic block diagram illustrating intrusion detection components and network in accordance with an aspect of the present invention.
Fig. 8 is a diagram illustrating a more detailed intrusion detection component in accordance with an aspect of the present invention.
Fig. 9 is a flow diagram illustrating security protocol processing in accordance with an aspect of the present invention.

### DETAILED DESCRIPTION OF THE INVENTION

The present invention relates to a system and methodology facilitating automation security in a networked-based industrial controller environment. Various components, systems and methodologies are provided to facilitate varying levels of automation security depending on considerations of system performance while promoting security in accordance with one or more security protocols. The security protocols can include protocol extensions that are adapted to factory networks. Dynamic security operations are provided that includes altering security patterns or interfaces based on such factors as performance, time, and the nature of network communications (*e.g*., who is requesting or sending data). The security protocols can also include integrity mechanisms, encryption mechanisms, session management protocols, intrusion detection components, and wireless considerations.

It is noted that as used in this application, terms such as "component," "security component," "protocol, " and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process and/or thread of execution and a component may be localized on one computer and/or distributed between two or more computers, industrial controllers, and/or modules communicating therewith.

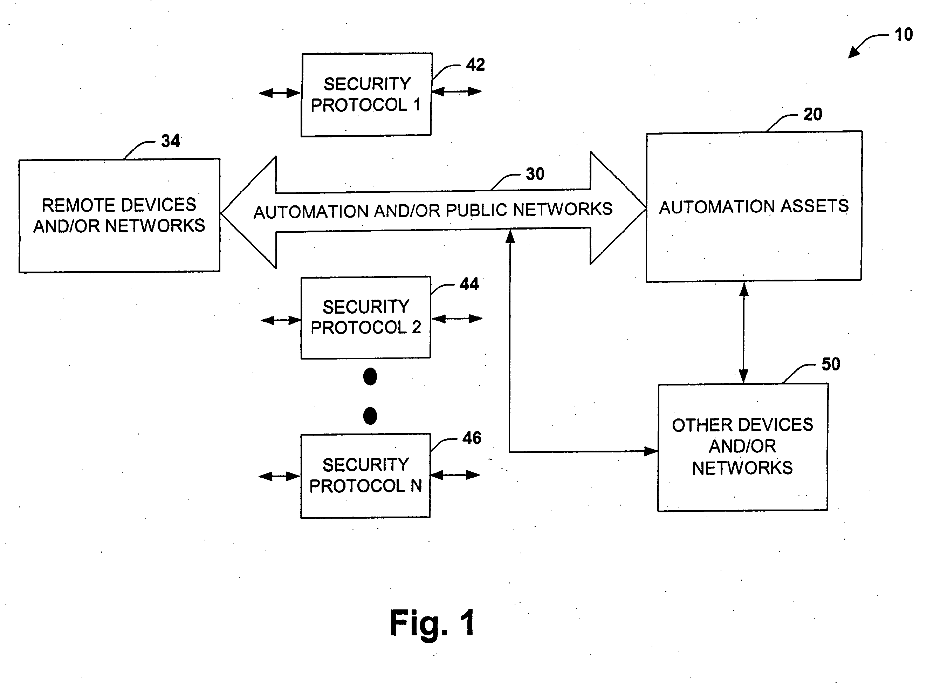

Referring initially to Fig. 1, an automation security system 10 is illustrated in accordance with an aspect of the present invention. The security system 10 includes one or more automation assets 20 (*e.g.,* substantially any type of control, communications, computer, sensor actuator, network sensor, I/O device, Human Machine Interface (HMI)) that communicate across a network 30 (includes control and/or public networks) to one or more remote devices and/or networks 34. It is noted that the remote devices 34 can also include other automation assets that may communicate on the network 30. In one aspect of the present invention, one or more security protocols 42-46 are employed to facilitate substantially secure communications on the network 34. Such security protocols 42-46 can be applied to a plurality of network situations and be determined, altered, adjusted based upon system performance and/or security considerations. For example, during real time communications between the remote devices 34 and the automation assets 20, lighter weight security protocols 42-46 may be employed to transmit data between network components, wherein lighter weight applies to the number of security data or extensions that may be provided or associated with a data packet that also are employed to mitigate impact on system performance. In one example, lighter weight may apply to providing less encryption to a data packet (*e.g.,* 24 bit encryption versus 168 bit encryption).

In another aspect, the security protocols may utilize higher-end or strong mechanisms when communications performance is not the overriding or primary consideration. For example, during an initial session establishment, rigorous security negotiations may be employed before further communications can occur between the remote devices 34 and the automation assets 20. In one example, a security negotiation may include both user/machine authentication and/or a machine authorization sequence before further communications can commence. It is to be appreciated that the security protocols 42-46 can be dynamically adjusted or altered as conditions change and/or over the course of time (*e.g.,* upon detection of a suspicious communication from an unknown network device, increase security protocols between remote device and automation asset to higher-end security mechanisms).

It is noted that the present invention can provide for dynamic protocol changes or adjustments based upon considerations of desired security levels and real time communications performance. Thus, if very high-end security is determined or utilized, then the amount of time to communicate data can be increased, whereas if lighter-weight protocols are employed, real time communications performance can be increased. As can be appreciated, these parameters (performance versus security) can be adjusted, adapted, configured before, during and/or after communications have commenced between the remote devices 34 and the automation assets 20 (includes automatic and/or manual adjustments). Also depicted in Fig.1 are other devices and/or networks 50 that may be employed with the security system 10 such as other factory networks, information networks, private networks, instrumentation networks, I/O devices and networks, back planes, modules, controllers, and/or other components that are utilized with the automation assets 20 and are described in more detail below. Such devices 50 may also employ one or more of the security protocols 42-46 when communicating with the automation assets 20, network 30, and/or remote devices 34.

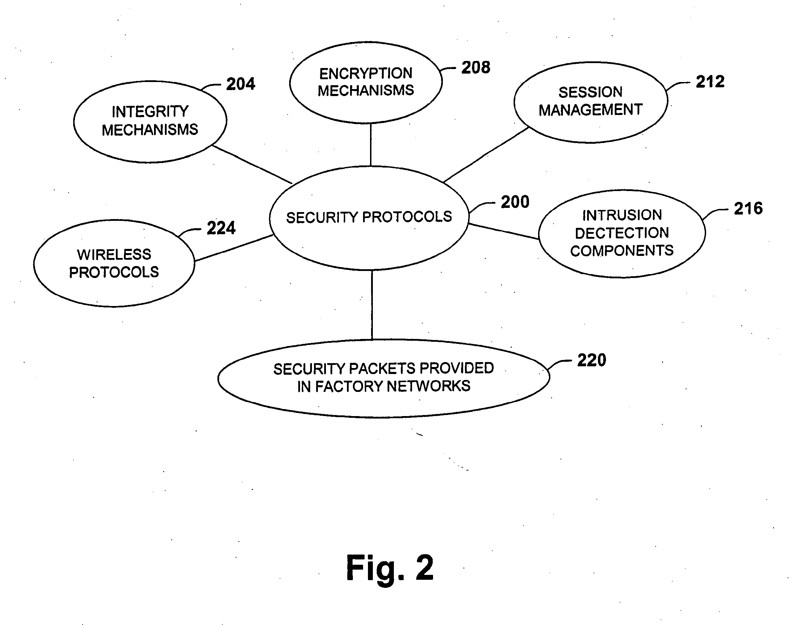

Referring now to Fig. 2, various security protocols 200 are illustrated in accordance with an aspect of the present invention. The security protocols 200 can be extended to facilitate secure operations within a control domain (*e.g.,* applied to factory protocol such as CIP, other control protocol, network protocols communicating with automation assets). The security protocols 200 include a set of scalable, real-time, lightweight, distributed security protocols, that can be deployed, operated, and/or maintained in accordance with a factory setting or environment in a reliable and unobtrusive manner.

In one aspect, a set of lightweight integrity mechanisms 204 can be provided to facilitate that correct data arrives at desired end points of communications. Such mechanisms include time stamps (for integrity), message digests, digital signatures, and sequence numbers, for example. Time-based components can be encoded within the security protocols 200 that include security time-outs after a predetermined amount of time has passed - thus, causing a subsequent determination or security negotiation before further data transactions can be achieved. . Other aspects include validating sources, checking whether message digests have been altered, and refreshing security protocols and components periodically and/or dynamically (*e.g*., utilizing TKIP protocols to change security keys frequently).

Another protocol aspect includes providing lightweight privacy or encryption mechanisms 208. Real-time delivery is typically not required for session establishment protocols (wherein identification information is carried) and device configuration (such as downloading a recipe). A set of protocols for session management can be provided at 212. Related functions include mutual authentication, ciphersuite negotiation, and/or other interactions with Authentication/Authorization/Accounting (AAA) services. A set of lightweight host and network intrusion detection methods/components can also be provided at 216. This can include such aspects as installing embedded components on low-end devices designed to monitor various network protocols for potential attacks or unwanted access (includes host and network based devices which are described in more detail below).

Protocol extensions can be adapted to low-end factory networks such as CIP networks and devices such as DeviceNet. The extensions can also accommodate Ethernet, wherein CIP and non-CIP applications can be attacked, and tunneling attacks are possible. In another aspect of the security protocols 200, one or more security packets can be adapted or provided in factory networks at 220. For example, CIP device functionality is described in terms of an object model. Basic functionality (such as identification and revision level) is core to most devices. Other functionality applies to specific device types (such as start, stop, forward/reverse in a motor drive). Optional protocol extensions facilitate enhancements such as security extensions, while still maintaining backward compatibility.

Another aspect of factory protocols such as CIP is the definition of control-specific transport mechanisms for data exchange between devices. The protocol supports a number of transport methods including producer/consumer, client/server and broadcast modes. These transport mechanisms are based on the concept of a connection. Before information is exchanged, a connection is negotiated between an originator and a target of communications. This can include adapting security within an object model security structure associated with respective factory components. Thus, in one aspect, connection level security can be employed in conjunction with a factory protocol. In addition, extensions can be provided to an "object content model" to protect/limit the configuration of intelligent devices connected to a network and/or direct/limit connections to the configuration of intelligent devices. The connection is typically defined by:
- The path (which may contain multiple hops *via* bridge devices)
- The desired object at the target
- The packet size
- The transfer rate

The path typically contains multiple segments that establish where, what and how information is to be transferred. The *where* segment contains information to specify the location of a specific device and instructions on the particular route, possibly *via* multiple bridges, the connection should utilize. The *what* segment contains the instructions on which specific object or data item is desired. Additional segments are employed to control scheduling of data transfers over some of the link layers.

Protocol or packet extensions can be provided in association with factory protocols such as extending the path information to include a *who* segment to identify a requester of the connection. This may take the form of an encrypted identification, certificate, public key and/or other process to identify the requester of the connection. Control devices can be adapted to verify the identity in the *who* segment in conjunction with centralized support. It is noted that identification typically involves several factors. In one aspect, Identification can be utilized for authentication (*e.g.,* something you are, have, and know). For factory level identification, the present invention can also provide "location-based" services and components. For example, components and protocols can be adapted for a "line of sight" approach for accessing a controller before actuating an output (*e.g.,* unless operator within line of site as sensed by a location sensor or wireless limitation, do not allow access to controller or limit what operator can affect). Other protocol extensions are also described in more detail below.

Similar low-end security can be addressed in wireless communications. Thus, one or more wireless protocols 224 can similarly be provided as a security protocol 200. Some data, such as audio, is often considered real-time in nature, whereby single-chip wireless micro-controllers have data processing capabilities similar to those utilized in automation systems. One example of a low-end encryption standard that may be applied to such data is a Temporal Key Interchange Protocol (TKIP) developed for IEEE 802.11i. Another example protocol is the utilization of Elliptical functions in control devices or networks (sometimes employed in cell phones) for public key security employing a minimum of resources. Another security aspect can be related to leveraging smart card technologies into control domains. Other possible protocols include:
- Authentication Protocols: Aziz/Diffie Protocol, Kerberos,
   Beller-Yacobi Protocol, Extensible authentication protocol
   (EAP), MSR+DH protocol, Future Public Land Mobile
   Telecommunication Systems Wireless Protocols (FPLMTS)
- Key Establishment Protocols: Beller-Chang-Yacobi Protocols,
   Aziz-Diffie Protocol, Diffie-Hellman Key Exchange, Parks
   Protocol, ASPeCT Protocol, TMN Protocol;
- Security components of Groupe Special Mobile (GSM) and
   Cellular Digital Packet Data (CDPD) as well as standards such as RADIUS.

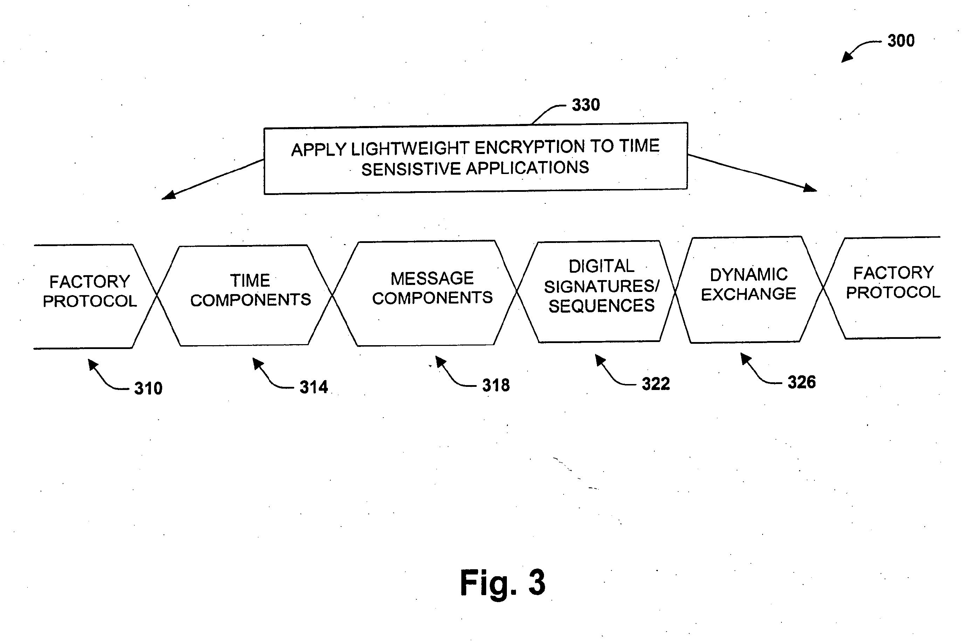

Turning to Fig. 3, an example security protocol 300 is illustrated in accordance with an aspect of the present invention. The security protocol 300 can be encoded within and/or associated with substantially any type of factory protocol 310 (e.g., Control and Information Protocol (CIP) including DeviceNet and ControlNet, Ethernet, DH/DH+, Remote I/O, Fieldbus, Modbus, serial protocols, and so forth). The factory protocol 310 can be adapted with one or more time components at 314. The time components 314 can include time-stamp information to indicate when data has been generated and/or communicated to determine such aspects as how stale or fresh security data is (e.g., the older the time stamp, the less trust worthy the data).

These components 314 can also include time-limited data such as a clock value indicating how long a communication session or data transfer can last or has time remaining (*e.g.,* a number indicating that there is so many seconds (or more or less) to transmit/receive data before having to renegotiate for further data transactions). At 318, one or more message-based components can be provided. Such components can include information that alter or changes an associated message digest at a network device depending on the type, source, destination, and/or amount of expected communications or traffic over a network. The message digests can then be compared for unwanted alterations or changes from predetermined conditions.

At 322, digital signatures and/or packet sequences can be provided and checked as an integrity message. For example, sequences can be constructed by two or more communicating devices that are only known between the devices and thus, employed to facilitate further communications between the devices (*e.g.,* during initial session establishment, agree between devices (*via* encrypted communications) to increment sequence counter by two (or other number) for every so many data packets transmitted/received). Similarly, digital signatures may be constructed/encoded at 322 by trusted devices that are utilized at a receiving end to verify a received communications have been transmitted by the trusted device or devices (*e.g*., decrypt digital signature and lookup whether or not signature is in list of trusted devices). Other type signatures may be generated/derived from a unique address range such as an Ethernet address, wherein if the address does not fall in a trusted range, then no further communications are permitted. At 326, dynamic information or security control information may be exchanged. In one example, the dynamic exchange 326 may include codes to indicate that further security negotiations are required.

In another aspect, the dynamic exchange 326, may include codes to indicate a change to a pre-agreed upon security format (*e.g.,* after 15 minutes of communications, flag (or code) is set to indicate a switch to another sequence or security protocol, or encrypted code indicating the next security protocol to employ). As illustrated at 330, one or more lightweight encryption techniques can be applied to all or portions of the security protocol illustrated at 300. Also, as noted above, if time (or other factors) is not as sensitive in a real-time data transport or control application, then higher levels of encryption or other security encoding may be applied.

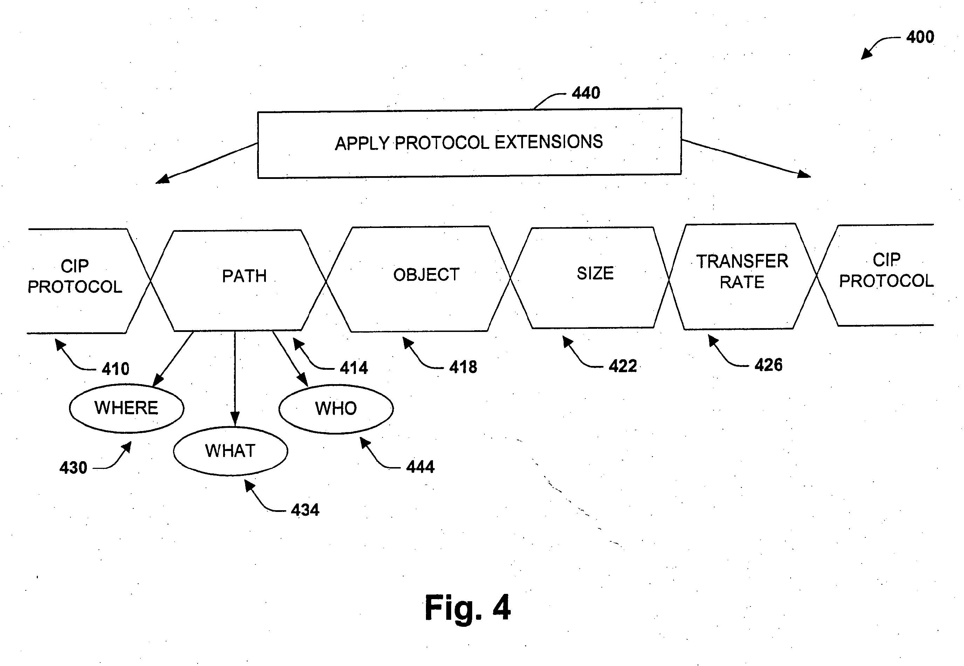

Fig. 4 illustrates an example security protocol extension 400 in accordance with an aspect of the present invention. In this aspect, a Control and Information Protocol 410 is illustrated, however, as noted above other factory protocols are possible. The CIP protocol 410 includes among other aspects a path segment at 414, an object segment at 422, a size segment at 426, and/or a transfer rate segment at 426. As noted above a connection is generally defined by the path segment 414, the desired data object at a target location at 418, the packet size at 422, and the transfer rate at 426 (*e.g*., transfer 500 bytes every 10 milliseconds). Also, the path segment 414 generally contains multiple segments that establish where, what and how information is to be transferred. A *where* segment 430 contains information to specify the location of a specific device and instructions on the particular route, possibly *via* multiple bridges, the connection should utilize. A *what* segment 434 typically contains instructions on which specific object or data item is desired. Additional segments can be employed to control scheduling of data transfers over some of the link layers. Protocol or packet extensions can be provided at 440 within substantially any segment 410-426 to facilitate security communications. For example, the path segment 414 can be extended include a *who* segment 444 to identify a requester of the connection. This may take the form of an encrypted identification, certificate, public key and/or other process to identify the requester of the connection as noted above.

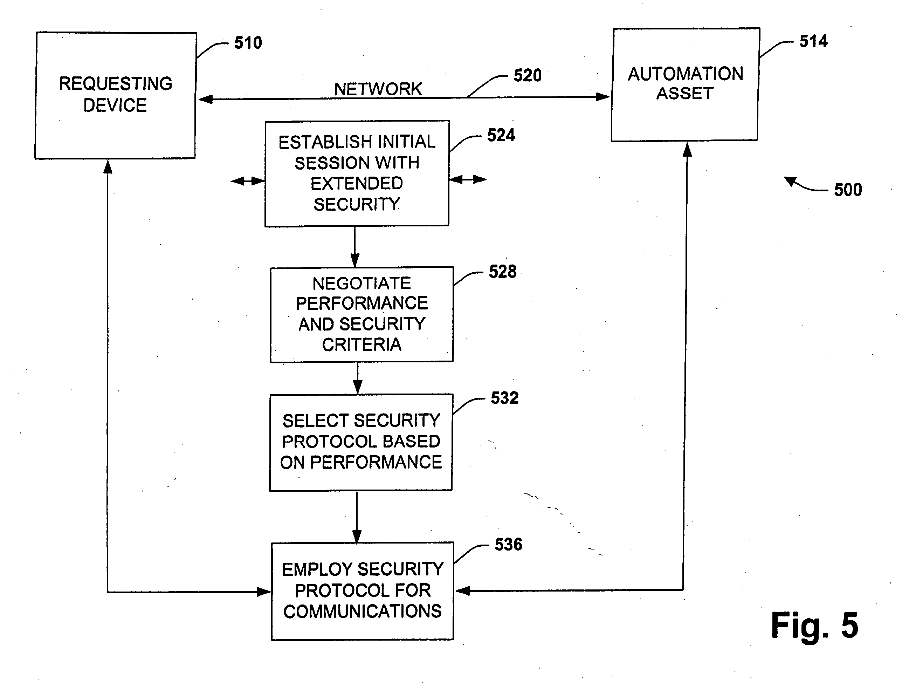

Fig. 5 is a diagram 500 illustrating dynamic protocol operations in accordance with an aspect of the present invention. A requesting device 510 attempts to access and/or exchange data with an automation asset 514 *via* a network 520. Before data is exchanged however, an initial communications session is established at 524. This can include an authentication and/or authorization procedure to establish whether or not the automation asset 514 should trust the requesting device 510 (can include user authentication procedures). As noted above, during initial security negotiations between the requesting device 510 and the automation asset 514, extended or heightened security may be employed. For example, extended encryption techniques may be utilized (*e.g*., employ 168 bit encryption during a Diffie-Hellman exchange), a Secure Socket Layer (SSL) established, public Key or digital certificate exchanged, an IPSec or IKE negotiation (Internet Protocol Security, Internet Key Exchange) and/or other security measures in addition to verification processing to determine a trusted identity with the requesting device 510.

At 528, communications performance and security criteria are negotiated. This can include determining the real time data transfer requirements across the network 520 while balancing the need for suitable security measures. If higher security measures are desired, data may be transferred at a sporadic rate, spread across multiple data packets, and/or delayed or buffered to allow for suitable security processing (*e.g*., for higher order encryption, encrypt smaller data packets, and transmit packets over several communication segments). For more real time communications, lightweight security protocols can be employed after the session is established at 524. This can include encrypting selected portions of a factory protocol - the portions to decode the overall data packet or segment, employing lower encryption sizes, utilizing time coded sequences, digital signatures, sequence data, dynamic alterations of protocols, and/or other techniques that may have less of an impact on the amount or rate of data transferred between the requesting device 510 and the automation asset 514. Proceeding to 532, a security protocol is selected based upon considerations of communications performance and desired security levels. After the protocol has been selected, the requesting device 510 (or devices) and automation asset 514 (or assets) employ the selected protocol for further communications. As noted above, protocols can change over time based upon dynamic security considerations/further negotiations and can include time elements that limit communications to a predetermined and/or negotiated time period before subsequent security negotiations are required.

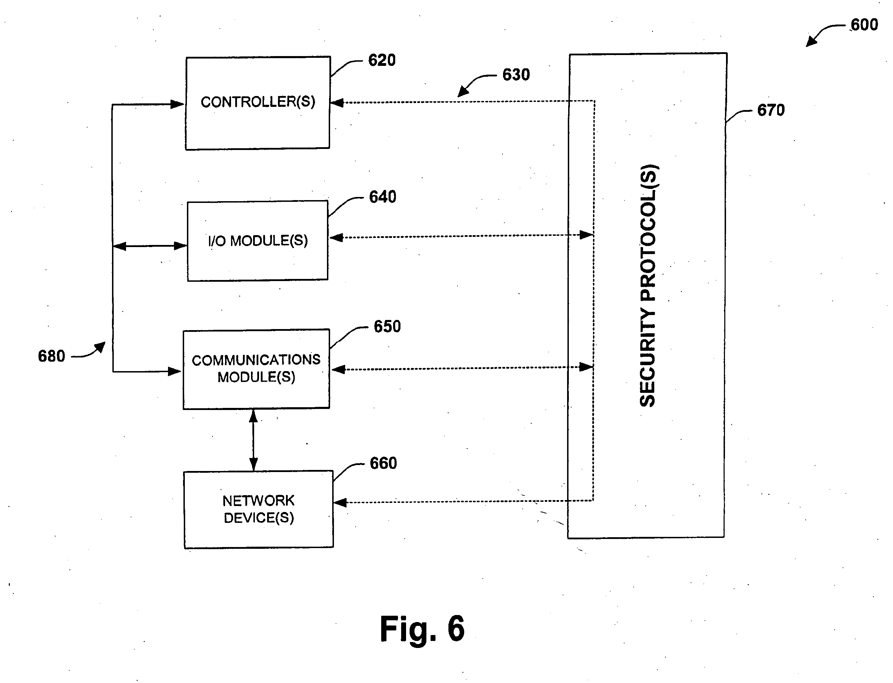

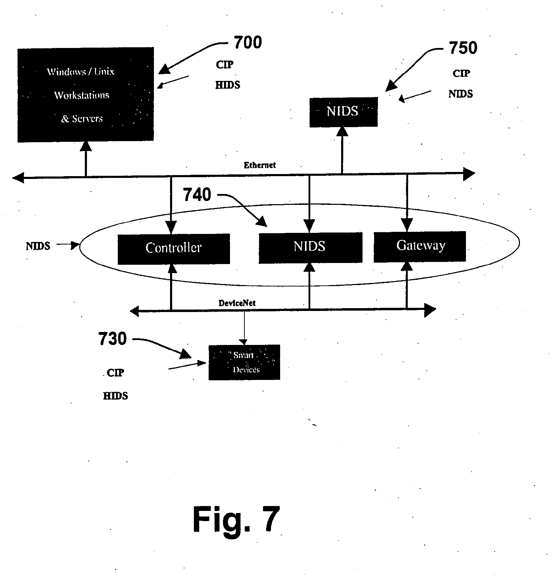

Before proceeding with a discussion of Figs. 6 and 7, it is noted that multiple components operative in a control environment are illustrated. This environment can include a plurality of controllers, I/O devices, communications modules, smart security devices, and so forth. It is noted that varying levels of security may be employed depending on the component and/or the control circumstances. For example, a smart security device may need a security component or functionality that differs from or is independent from a controller or a communications module. As can be appreciated, some components may also be adapted with similar security aspects.

Referring to Fig. 6, a system 600 illustrates security communications in accordance with an aspect of the present invention. The system 600 includes an industrial controller 620 communicating to one or more other systems across a local factory network (e.g., DeviceNet, ControlNet, Ethernet/IP, DH+, Intranet) and/or a public network 630 such as TCP/IP or the Internet. This can also include other communications options such as phone connections and/or wireless interactions. A processor (not shown) (or processors) in the controller 620 executes from an associated memory subsystem (not shown) that can include an operating system (*e.g*., Microsoft® Windows® NT/2000/XP, Windows CE, Linux, .NET, OS-9, UNIX, VRTX, QNX, VxWorks, CE.NET, custom-designed). The controller 620 can also communicate to and control various Input/Output modules 640 such as Analog, Digital, Programmed/Intelligent I/O modules, other programmable controllers, communications modules at 650, human machine interfaces devices (HMI), and/or network devices at 660. The network device 660 can include at least one application to exchange data with the controller 620 *via* a communications component (not shown) suitably adapted to transfer information on the network 630. Control data can be monitored (*e.g.,* data sent or received) to/from the controller 620 (or other control components, databases) in response to instructions or commands executed by the application or other components. The application can include substantially any type of software for manipulating the control data such as an editor tool (*e.g.,* RSLOGIX®), interface component, and/or communications component, whereby the control data is generally processed on a local memory or storage device associated with the network device 660. This can include such interactions as exchanging, creating, viewing and/or modifying controller programs or memory that are generally a by-product of the control data.

As illustrated, one or more security protocols are employed across the network 630 to facilitate secure data exchanges. For example, the controller 620 and the I/O modules 640 may employ lightweight security protocols in view of real time data transfer considerations, whereas the controller 620 and the network device 660 may employ more extensive security measures when communicating. As can be appreciated, a plurality of security protocols 670 can be employed in varying measures and/or techniques in accordance with the present invention. It is also noted that internal and/or non-network communications may be employed at 680 that do not require any security measures (e.g., back plane communications between controller and other modules). However, it is to be appreciated that the security protocols 670 can also be applied at 680 if desired.

Turning to Fig. 7, one or more intrusion detection components and networks are illustrated in accordance with an aspect of the present invention. Intrusion Detection System (IDS) technology can be provided for industrial protocols. In one aspect, a Host based IDS (HIDS) can be provided and installed as software (and/or hardware) on a device to detect attacks targeted at that device such as Trojan executables and viruses, for example. Network based IDS (NIDS) are dedicated IDS security appliances that monitor network traffic and look for signatures of known attacks or other violations. Though widely available, IDS products have generally not been applied to industrial protocols. For example, CIP protocol attack signatures (or other factory protocol signatures) can be developed for IDS based components, At the Ethernet level, for example, standard NIDS platforms are available that can be enhanced with CIP (or other type) signatures. Devices that participate in CIP transactions may:
- Adapt CIP protocol extensions as HIDS (illustrated at 700 of Fig. 7) to check attacks on end-to-end transaction integrity;
- Low-level devices can also check transaction integrity (illustrated at 730 of Fig. 7), but generally have limited resources for HIDS;
- Off-loading IDS as NIDS appliance (illustrated at 740 and 750 of Fig. 7). This device reports through Ethernet, making it similar to gateway hardware. A controller often has a similar structure. Thus, the NIDS function at 740 could be a software module in any of the devices.

Components can also be provided to detect intrusions at the automation device network level and to detect attacks to automation protocols encapsulated in Ethernet, for example. The CIP protocol (or other factory protocols) can thus be analyzed for intrusion detection possibilities and adapted thereto.

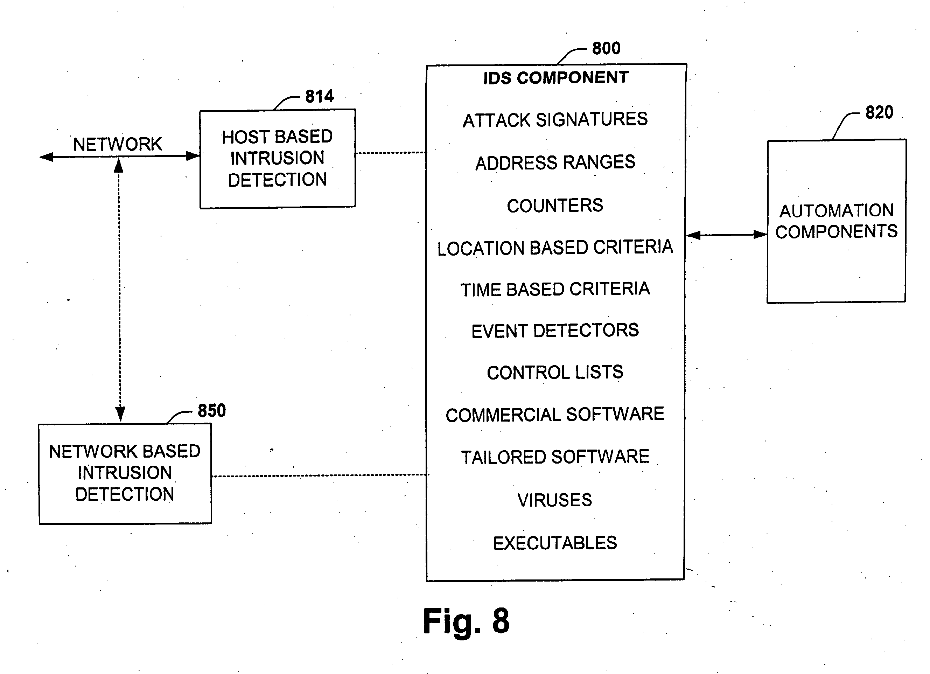

Fig. 8 illustrates a more detailed intrusion detection component 800 in accordance with an aspect of the present invention. The intrusion detection component 800 can be part of a network-based intrusion detection component 810 that monitors a network 820 and interacts with one or more automation components at 830. Alternatively, the intrusion detection component 810 can be part of a host-based intrusion detection component 840 that is associated with and/or installed on a single automation component 830. As can be appreciated, various combinations of network-based and/or host-based intrusion detection components 810 and 840 can be employed in accordance with the present invention.

The intrusion detection component 810 can include hardware aspects, software aspects, and/or combinations thereof and be configured for one or more or the following security aspects. Such aspects can include: monitoring for known attack signatures; monitoring one or more addresses or address ranges (*e.g.,* network request not from predetermined address or range ignored or more heavily scrutinized); employing counters to determine if hackers or unwanted systems are attempting to gain access in a repetitious manner (*e.g.,* after a certain number of rejected connections sound alarm); employing location-based criteria when establishing connections (*e.g.,* network requests from predetermined locations automatically rejected); employing time-based criteria (*e.g.,* all requests during certain time periods ignored, deciding in advance that no communications are going to be conducted during certain periods and if any device communicates during designated period, recording this communication and possibly rejecting future communications to device).

Other aspects include: employing event detectors to record anomalous or non-routine occurrences which can include firing an associated alarm to a subsequent system; checking control lists for addresses of authorized users and/or machines; employing commercially available intrusion detection hardware and/or software which can also include modifications thereto for control or factory protocols; virus detection and/or detection for Trojan executables as noted above. As can be appreciated, substantially any software or hardware adapted for monitoring, mitigating, and/or alarming unwanted network access, attempts, or attacks can be utilized in accordance with the present invention.

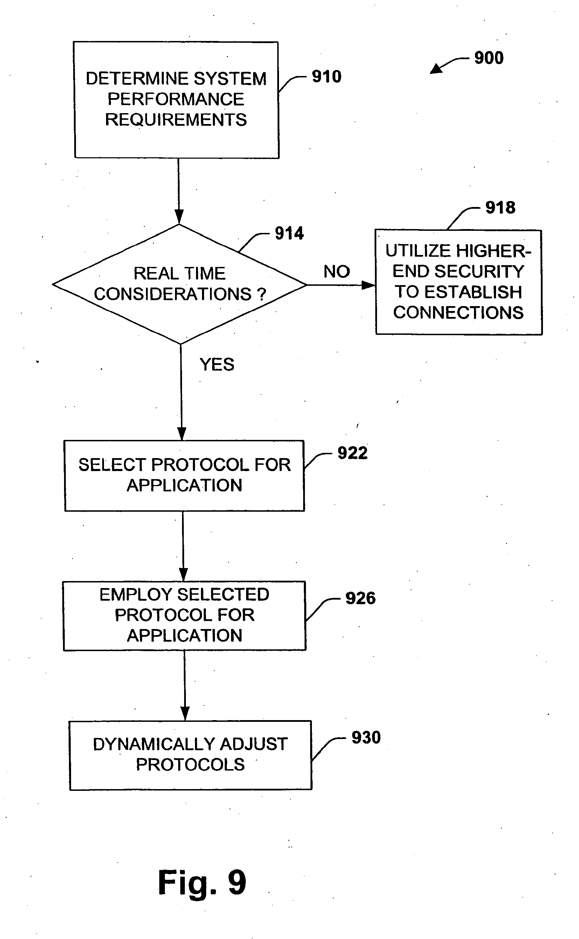

Fig. 9 illustrates a security methodology 900 in accordance with an aspect the present invention. While, for purposes of simplicity of explanation, the methodology is shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

Fig. 9 is a flow diagram 900 illustrating security protocol processing in accordance with an aspect of the present invention. Proceeding to 910, system performance requirements are determined for security communications and associated processing. As noted above, this can include determining and/or trading off between real time data transfer considerations and the amount of security/related processing that is to be attained. At 914, a determination is made as to whether or not any real time considerations apply in the transfer of data between network devices and automation assets. If real time considerations are not a substantial concern, the process proceeds to 918, wherein higher-end security mechanisms and/or protocols are utilized. As previously noted, during initial communications whereby connections are established and/or trusts negotiated, higher forms of encryption, authentication, and/or authorization may be employed before commencing with further communications. If real time considerations are a substantial factor, such as in dedicated factory networks controlling automation events, then a suitable lightweight factory protocol is selected at 922. At 926, the protocol selected at 922 is employed for factory communications. At 930, the protocols selected at 926 can be dynamically adjusted based upon detected conditions and/or in accordance with periodic processing as previously noted.

What has been described above are preferred aspects of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the .scope of the appended claims.

## Claims

1. An automation security system, comprising:
an automation device (730; 820) adapted for network communications in an industrial network;
an industrial network protocol utilized by the automation device for network communications;
the automation security system being **characterized by** comprising:
an intrusion detection component (216; 700, 730, 740, 750; 800, 814, 850) adapted for the industrial network protocol to detect network attacks directed to the automation device by monitoring the industrial network protocol.

2. The system of claim 1, wherein the intrusion detection component is at least one of a host-based component (700, 730; 814) and a network-based component (740, 750; 850).

3. The system of claim 1 or 2, wherein the intrusion detection component (800) is adapted to at least one of an attack signature, an address, an address range, a counter, a location, a time, an event, a control list, a virus and a Trojan executable.

4. A security violation detection method, the method being **characterized by** the steps of:
adapting an industrial network protocol in accordance with an intrusion detection technology (700, 730, 740, 750; 800, 814, 850); and
monitoring, by an intrusion detection component, the industrial network protocol to detect network attacks directed to an automation device in an industrial network via the intrusion detection technology.

5. The method of claim 4, further comprising monitoring the industrial network for flooding attacks.

6. The method of claim 4, further comprising:
detecting an attack protocol; and
automatically performing a security action after detecting the attack protocol.

7. The method of claim 6, the security action further comprising at least one of enabling an alarm, denying network access to the attack protocol, and removing a virus or an executable from the automation device.

## Patentansprüche

1. Automatisierungssicherheitssystem, umfassend:
eine Automatisierungsvorrichtung (730; 820), die für Netzwerkkommunikationen in einem industriellen Netzwerk eingerichtet ist;
ein industrielles Netzwerkprotokoll, das von der Automatisierungsvorrichtung für die Netzwerkkommunikationen verwendet wird;
wobei das Automatisierungssicherheitssystem **dadurch gekennzeichnet ist, dass** es umfasst:
eine Angriffserkennungskomponente (216; 700, 730, 740, 750; 800, 814, 850), die so eingerichtet ist, dass das industrielle Netzwerkprotokoll Netzwerkangriffe, die auf die Automatisierungsvorrichtung gerichtet sind, durch Überwachen des industriellen Netzwerkprotokolls erkennt.

2. System nach Anspruch 1, wobei die Angriffserkennungskomponente mindestens eines aus einer hostbasierten Komponente (700, 730; 814) und einer netzwerkbasierten Komponente (740, 750; 850) ist.

3. System nach Anspruch 1 oder 2, wobei die Angriffserkennungskomponente (800) für mindestens eines aus einer Angriffssignatur, einer Adresse, einem Adressbereich, einem Zähler, einem Standort, einer Zeit, einem Ereignis, einer Steuerungsliste, einem Virus und einem ausführbaren Trojaner eingerichtet ist.

4. Verfahren zur Erkennung einer Sicherheitsverletzung, wobei das Verfahren **durch** folgende Schritte **gekennzeichnet** ist:
Anpassen eines industriellen Netzwerkprotokolls entsprechend einer Angriffserkennungstechnologie (700, 730, 740, 750; 800, 814, 850); und
Überwachen, durch eine Angriffserkennungskomponente, des industriellen Netzwerkprotokolls, um Netzwerkangriffe, die auf eine Automatisierungsvorrichtung in einem industriellen Netzwerk gerichtet sind, über die Angriffserkennungstechnologie zu erkennen.

5. Verfahren nach Anspruch 4, des Weiteren umfassend das Überwachen des industriellen Netzwerks auf Überflutungsangriffe.

6. Verfahren nach Anspruch 4, des Weiteren umfassend:
Erkennen eines Angriffsprotokolls; und
automatisches Durchführen einer Sicherheitsaktion nach dem Erkennen des Angriffsprotokolls.

7. Verfahren nach Anspruch 6, wobei die Sicherheitsaktion des Weiteren mindestens eines aus Aktivieren eines Alarms, Verweigern des Netzwerkzugriffs auf das Angriffsprotokoll und Entfernen eines Virus oder einer ausführbaren Datei von der Automatisierungsvorrichtung umfasst.

## Revendications

1. Système de sécurité d'automation, comprenant :
un dispositif d'automation (730 ; 820) adapté pour des communications en réseau dans un réseau industriel ;
un protocole de réseau industriel utilisé par le dispositif d'automation pour des communications en réseau ;
le système de sécurité d'automation étant **caractérisé en ce qu'**il comprend :
un composant de détection d'intrusion (216 ; 700, 730, 740, 750 ; 800, 814, 850) adapté pour que le protocole de réseau industriel puisse détecter des attaques du réseau ciblant le dispositif d'automation en surveillant le protocole de réseau industriel.

2. Système selon la revendication 1, dans lequel le composant de détection d'intrusion est au moins un composant parmi un composant basé sur l'hôte (700, 730 ; 814) et un composant basé sur le réseau (740, 750 ; 850).

3. Système selon la revendication 1 ou 2, dans lequel le composant de détection d'intrusion (800) est adapté pour au moins un élément parmi une signature d'attaque, une adresse, une plage d'adresses, un compteur, un emplacement, un temps, un événement, une liste de contrôle, un virus et un cheval de Troie exécutable.

4. Procédé de détection de violation de sécurité, le procédé étant **caractérisé par** les étapes suivantes :
adaptation d'un protocole de réseau industriel conformément à une technologie de détection d'intrusion (700, 730, 740, 750 ; 800, 814, 850) ; et
surveillance, par un composant de détection d'intrusion, du protocole de réseau industriel pour détecter des attaques du réseau ciblant un dispositif d'automation dans un réseau industriel via la technologie de détection d'intrusion.

5. Procédé selon la revendication 4, comprenant en outre la surveillance du réseau industriel pour des attaques par congestion.

6. Procédé selon la revendication 4, comprenant en outre :
la détection d'un protocole d'attaque ; et
la mise en œuvre automatique d'une action de sécurité après la détection du protocole d'attaque.

7. Procédé selon la revendication 6, l'action de sécurité comprenant en outre au moins une action parmi l'habilitation d'une alarme, le déni d'accès au réseau pour le protocole d'attaque, et l'élimination d'un virus ou d'un fichier exécutable du dispositif d'automation.
